**Europäisches Patentamt**

**European Patent Office**

**Office européen des brevets**

(19)

(11) Veröffentlichungsnummer: **0 090 075**
**B1**

(12) ## EUROPÄISCHE PATENTSCHRIFT

(45) Veröffentlichungstag der Patentschrift:
04.06.86

(51) Int. Cl.⁴: **F 16 D 3/50,** F 16 D 13/68

(21) Anmeldenummer: **82109563.5**

(22) Anmeldetag: **15.10.82**

(54) **Drehelastische Kupplung.**

(30) Priorität: **26.03.82 DE 3211238**

(43) Veröffentlichungstag der Anmeldung:
**05.10.83 Patentblatt 83/40**

(45) Bekanntmachung des Hinweises auf die Patenterteilung:
**04.06.86 Patentblatt 86/23**

(84) Benannte Vertragsstaaten:
**AT BE CH DE FR GB IT LI NL SE**

(56) Entgegenhaltungen:
**FR - A - 957 151**
**US - A - 1 488 740**
**US - A - 1 967 052**
**US - A - 4 252 227**

(73) Patentinhaber: **WOCO Franz-Josef Wolf & Co.,**
**Sprudelallee 19, D-6483 Bad Soden-Salmünster (DE)**

(72) Erfinder: **Wolf, Franz Josef, Sprudelallee 19, D-6483 Bad**
**Soden-Salmünster (DE)**
Erfinder: **Pletsch, Hubert, Am Quellenrain 13,**
**D-6483 Bad Soden-Salmünster (DE)**

(74) Vertreter: **Jaeger, Klaus, Dr. et al, JAEGER & PARTNER**
**Patentanwälte Bergstrasse 48 1/2,**
**D-8035 München-Gauting (DE)**

## Beschreibung

Die Erfindung betrifft eine drehelastische Kupplung, bei der die beiden Kupplungshälften durch mindestens ein federndes Zwischenglied miteinander verbunden sind.

Kupplungen dieser Art dienen der drehelastischen Übertragung von Drehmomenten zwischen zwei insbesondere koaxialen Wellen.

Drehelastische Kupplungen der in Rede stehenden Art bestehen gebräuchlicherweise aus konzentrisch angeordneten Kupplungshälften mit alternierend angeordneten ineinander- oder hintereinandergreifenden Klauen, Widerlagern oder Anschlägen, zwischen denen federnde Zwischenglieder angeordnet sind. Diese federnden Zwischenglieder bestehen in aller Regel aus einem Elastomer und sind insbesondere in Form elastischer Zugschnüre, in Form von Laschen, in Form von Puffern oder auch in Form von Wulstringen oder Wulstscheiben ausgebildet.

Nachteilig an allen bekannten drehelastischen Kupplungen dieser Art ist, dass der Federwinkel zwischen beiden Kupplungshälften zu klein ist und dass die federnden Zwischenglieder sowohl auf Druck als auch auf Zug bzw. ausschliesslich scherend belastet werden, wobei eine solche Wechselbelastung, insbesondere bei der Verwendung eines Elastomers als Werkstoff für die federnden Zwischenglieder, rasch zu irreversibler Materialermüdung führt. Unter «Federwinkel» wird dabei der maximale Verdrehwinkel verstanden, um den die beiden Kupplungshälften innerhalb eines sinnvoll nutzbaren Arbeitsbereiches relativ gegeneinander federnd und dämpfend verdrehbar sind.

Weiterhin ist aus der Druckschrift DE-A-31 13 813 entsprechend US-A-4 437 847 eine drehelastische Kupplung der eingangs genannten Art bekannt, bei der die aus einem Elastomer bestehenden federnden Zwischenglieder unabhängig von der Drehrichtung der Antriebskupplungshälfte nur noch unter Druck belastet werden, jedoch beträgt auch bei dieser drehelastischen Kupplung der Federwinkel nur wenig Grad. Wie bei allen anderen bekannten drehelastischen Kupplungen, so ist auch mit der aus der DE-A-31 13 813 bekannten drehelastischen Kupplung keine Federkennlinie erhältlich, die sich über einen Federwinkelbereich von grösser als 15° oder 20° erstreckt.

Einen nutzbaren elastisch gefederten Drehwinkel von nur wenigen Grad weist auch die Kupplung des Tilgers gemäss der amerikanischen Patentschrift US-A-1 967 052 auf, bei der tangential angeordnete Blattfederpakete radial verschiebbare Stössel nach radial einwärts beaufschlagen, die ihrerseits mit keilförmigen Nockenflächen zusammenwirken bzw. auf diesen geführt sind, und zwar in der Weise, dass die Stössel bei einer Relativverdrehung der beiden Kupplungshälften gegeneinander nach radial auswärts gegen die Federbeaufschlagung gezwungen werden.

Schliesslich lässt auch die aus der französischen Patentschrift FR-A-957 151 bekannte drehelastische Kupplung einen nur kleinen relativen Drehwinkel zwischen zwei zueinander konzentrisch angeordneten Kupplungshälften zu, zwischen denen eine manschettenartige Gummifeder bei einer Relativverdrehung der beiden Kupplungshälften gegeneinander zwischen zwei nach dem Keilprinzip zusammenwirkenden Arbeitsflächen der Kupplungshälften verformt wird. Dadurch, dass die federnde Gummimanschette jedoch mit beiden Kupplungshälften fest verbunden ist, unterliegt sie nicht nur der Kompressionsverformung zwischen den beiden Keilflächen, sondern auch einer signifikanten Scherverformung, die bei grösseren Drehwinkeln oder höherer Frequenz der Relativverdrehung der beiden Kupplungshälften gegeneinander zur raschen Ermüdung der Gummifeder führt.

Auf zahlreichen Gebieten der Technik tritt jedoch immer häufiger der Wunsch nach einer drehelastischen Kupplung mit ganz wesentlich grösseren Federwinkeln auf. Dieses Bedürfnis ist zur Zeit insbesondere auf dem Bereich des Kraftfahrzeugbaus vorhanden. Die Forderung nach Einsparung von Kraftstoff zeigt auf dem Sektor des Automobilbaus deutlich in Richtung des Einsatzes von Motoren mit niedrigerer Drehzahl. Solche Motoren stehen zwar inzwischen reichlich und funktionserprobt zur Verfügung, jedoch scheitert ihr Einsatz bislang an der mangelnden Drehelastizität der bekannten Kupplungen. Motoren, die beispielsweise ein sicheres Anfahren eines Kraftfahrzeuges bei Motordrehzahlen im Bereich von ungefähr 200 bis 400 min$^{-1}$ ermöglichen sollen, erfordern drehelastische Kupplungen mit Federwinkeln von mindestens ungefähr 35°. Mit den bekannten drehelastischen Kupplungen können die bei niedrigen Drehzahlen oder hektischer Fahrweise auftretenden Lastwechseldrehmomentstösse, die zu Lastwechselschwingungen in Längsrichtung des Fahrzeugs führen, nicht aufgefangen werden. Auch können die bei Kraftfahrzeugen in Längsrichtung auftretenden Resonanzschwingungen mit den bekannten drehelastischen Kupplungen nicht unterkritisch entkoppelt werden. Aus diesem Grunde werden im Kraftfahrzeugbau die bekannten drehelastischen Kupplungen mit Verdrehwinkelkennlinien oder Federwinkeln von bis zu maximal 20° nur zur Löschung von Getriebegeräuschen, nicht aber zur Dämpfung von Lastwechseldrehmomentstössen abgestimmt.

Angesichts dieses Standes der Technik liegt der Erfindung die Aufgabe zugrunde, eine drehelastische Kupplung mit langer Betriebslebensdauer zu schaffen, die eine Verdrehwinkelkennlinie bzw. einen Federwinkel von weit über 20°, insbesondere bis zu über 90°, auszunutzen ermöglicht.

Zur Lösung dieser Aufgabe schafft die Erfindung eine drehelastische Kupplung der eingangs genannten Art, die erfindungswesentlich die im kennzeichnenden Teil des Patentanspruchs 1 genannten Merkmale aufweist.

Der Grundgedanke der Erfindung ist also darin zu sehen, dass die im wesentlichen tangentiale oder sekantiale Druckbeaufschlagung oder Scherbeaufschlagung der zwischen den Kupplungshälften angeordneten federnden Zwischenglieder durch eine Umwandlung der Relativverdrehung der beiden Kupplungshälften gegeneinander über einen Bewegungsrichtungsumsetzer, beispielsweise einen Exzenter, in eine zumindest im wesentlichen radiale, translatorische Beaufschlagung der federnden Zwischenglieder ersetzt wird.

Bei entsprechender Abstimmung des Umsetzergliedes, beispielsweise der Exzentrizität des Exzentergliedes oder Kurbelgliedes und der Federkenndaten der federnden Zwischenglieder aufeinander können Federwinkel von bis zu ± 180° nutzbar gemacht werden.

Die Umsetzung einer Relativverdrehung der beiden vorzugsweise koaxial zueinander angeordneten Kupplungshälften in eine zumindest im wesentlichen translatorische radial einwärts oder auswärts gerichtete Kraft- und Bewegungskomponente, die die federnden Zwischenglieder beaufschlagt, kann prinzipiell beispielsweise über Kurbelglieder oder Exzenterglieder erfolgen und erfolgt vorzugsweise über ein Exzenterglied. Dieses Exzenterglied ist insbesondere als eine Exzenterscheibe oder als eine Gruppe axial aufeinanderfolgender Exzenterscheiben ausgebildet, die exzentrisch oder drehfest mit einer Kupplungshälfte verbunden ist oder sind und gleitfähig oder drehbar an mindestens einem bzw. mehreren der federnden Zwischenglieder, von denen vorzugsweise jeweils eines jeweils einer Exzenterscheibe zugeordnet ist, abstützend angreifen oder gelagert oder angelenkt sind.

Die federnden Zwischenglieder sind vorzugsweise aus verstärktem oder unverstärktem Elastomer gefertigt, können jedoch auch aus Federstahl hergestellt werden und beispielsweise die Form von Schraubenfedern, Elliptikfedern oder speziell angepasst geformten Blattfedern haben. Bei Verwendung eines Elastomers zur Herstellung der federnden Zwischenglieder kann die Druckbelastbarkeit des Elastomers in an sich bekannter Weise durch das Einvulkanisieren von Zwischenblechen zur Querdehnungsbehinderung erhöht werden. Wenn die Kupplung koaxial und konzentrisch hinsichtlich der beiden Kupplungshälften aufgebaut ist, sind die federnden Zwischenglieder vorzugsweise in Form von zumindest im wesentlichen zylindrisch gekrümmten Schalenelementen ausgebildet. Jedes dieser gummielastischen Schalenelemente ist mit einer seiner zylindrisch gekrümmten Mantelflächen drehfest mit einer der Kupplungshälften verbunden, und zwar beispielsweise verschraubt, verklebt und/oder auf dieser aufvulkanisiert, vorzugsweise formschlüssig aufgesteckt, insbesondere durch Einschieben in axialer Richtung aufgesteckt, oder aufgeklipst und mit seiner anderen Zylindermantelfläche mit einem Stütz- oder Lagerelement verbunden, in dem das die Rotation in eine radiale Translation bzw. umgekehrt umsetzende Glied, beispielsweise also das Exzenterglied, der anderen Kupplungshälfte gelagert ist oder an das dieses angreift.

Bei Beaufschlagung der mit dem Umsetzerglied drehfest verbundenen Kupplungshälfte mit einem Drehmoment wird dieses Drehmoment über das Umsetzerglied, beispielsweise also einen Exzenter, in eine radial gerichtete Arbeit umgesetzt, die auf das federnde Zwischenglied einwirkt. Der Kraft dieser Arbeit wirkt die Federkraft des federnden Zwischengliedes so lange zunehmend entgegen, bis das Lastdrehmoment an der anderen, ausgangsseitigen Kupplungshälfte und das Antriebsdrehmoment an der beaufschlagten eingangsseitigen Kupplungshälfte im Drehmomentengleichgewicht stehen. Wie gross im Augenblick dieses Drehmomentengleichgewichtes der Verdrehwinkel ist, also der Winkel ist, um den die beiden Kupplungshälften relativ gegeneinander verdreht sind, hängt von der Abstimmung des Grades der Exzentrizität des Exzenters und der Federkennlinie der federnden Zwischenglieder. Je weicher beispielsweise bei vorgegebener Exzentrizität des Exzentergliedes die Federkennlinie der federnden Zwischenglieder ist, desto grösser wird der Verdrehwinkel sein, der sich bei einer vorgegebenen Grösse der Drehmomente im Drehmomentengleichgewicht einstellt. Je grösser wiederum dieser Verdrehwinkel im Bereich des Drehmomentengleichgewichts ist, desto weicher stellt sich das Drehmomenten-Übertragungsverhalten der Kupplung in der Drehmoment-Verdrehwinkel-Kennlinie, also der Federkennlinie der drehelastischen Kupplung dar.

Für normalen Betrieb werden die Exzentergeometrie und die Federkennlinie der federnden Zwischenglieder zweckmässigerweise so ausgelegt, dass sich bei dem unter normalen Betriebsbedingungen zu erwartenden maximalen Drehmoment, mit dem die Kupplung beaufschlagt wird, ein Verdrehwinkel im Bereich von ungefähr 60° bis 100° einstellt. Der von dem solcherart abgestimmten und eingestellten Verdrehwinkel bis zum maximal möglichen Federwinkel von 180° verbleibende Winkelbetrag von rund 80° bis 120° dient dabei der anschlagfreien weichen Überlastungssicherung.

So kann beispielsweise eine Kupplung, die auf einen Verdrehwinkel von 90° bei im Normalbetrieb maximalem Drehmoment ausgelegt ist ohne weiteres mit schlagartig auftretenden wesentlich grösseren Drehmomenten als dem im Normalbetrieb maximal zu erwartenden Drehmoment beaufschlagt werden, ohne dass dies in der abgetriebenen Welle zu Schlägen, Stössen oder zum Reissen führt, da solche Drehmomentstösse von der drehelastischen Kupplung mit weicher Progression der Kennlinie, aber anschlagfrei bis zu einem Federwinkel von 180°, also dem doppelten Betrag des in dem hier angenommenen Beispiel vorgesehenen normalen maximalen Verdrehwinkels von 90°, aufgenommen werden können. Beim Einleiten von Drehmomenten in die Kupplung, die selbst diesen Sicherheitsbereich überschreiten, tritt dann lediglich ein «Durchrutschen» der Kupplung auf. Bei der Verdrehung der beiden Kupplungshälften gegeneinander um Winkel von grösser als 180° tritt von gegebenenfalls geringfügig auftretenden Scherkräften abgesehen, eine zunehmende Entlastung der federnden Zwischenglieder ein, und zwar so lange, bis nach Vollendung einer Relativverdrehung der beiden Kupplungshälften gegeneinander von 360°, bezogen auf die entlastete Nullstellung der Kupplung, wieder die zunehmende radiale Beaufschlagung der federnden Zwischenglieder eintritt, durch die der Normalbetrieb der Kupplung gekennzeichnet ist.

Die drehelastische Kupplung gemäss der Erfindung zeigt also in der vorstehend beschriebenen Ausführungsform einen als ideal zu bezeichnenden anschlagfreien und zerstörungsfreien absolut funktionssicheren Überlastungsschutz für die Kraftübertragung.

Alternativ kann jedoch auch das vorstehend beschriebene Durchrutschen der Kupplung bei Überlastung durch Anschlagmittel begrenzt werden, wobei solche Anschlagmittel entweder den radialen Federweg der federnden Zwischenglieder oder die Relativverdrehung der beiden Kupplungshälften gegeneinander durch Klauenanschlag begrenzen. Solche Anschlagmittel werden in den Fällen zweckmässig sein, in denen ein Rechteckabbruch der Federkennlinie der Kupplung nicht schädlich und/oder hinnehmbar ist und zugunsten grösserer Federwinkelbereiche für den Normalbetrieb mit kleineren Reservebereichen des Verdrehwinkels gearbeitet werden soll oder muss. So werden also solche Anschlagmittel vorzugsweise dann vorgesehen sein, wenn die Kupplung beispielsweise auf einen Federwinkel von 170° für die bei Normalbetrieb zu erwartenden maximalen Drehmomente ausgelegt ist. Auch aus Sicherheitsgründen wird es häufig erforderlich sein, ein Durchrutschen der Kupplung durch Anschlagmittel auszuschliessen.

Schliesslich lassen sich auch anschlagfreie nutzbare Federwinkel von weit über 180° in einfacher Weise dadurch einstellen, dass das drehfest und exzentrisch mit der einen Kupplungshälfte verbundene Exzenterglied gleichzeitig relativ zu dieser Kupplungshälfte axial verschiebbar ausgebildet ist, beispielsweise unter Führung der axialen Verschiebung durch den Eingriff an den federnden Zwischengliedern, so dass statt der in einer Ebene liegenden nutzbaren halbkreisförmigen Exzenterwirkungslinie eine prinzipiell beliebige Federwinkel zulassende Spiralschraubenwirkungslinie ausnutzbar ist. Mit anderen Worten, wenn also der übliche scheibenförmige Exzenter als Umsetzerglied durch eine radial drehfest aber axial verschiebbare Hülse mit spiralschraubenförmiger Nockenfläche ersetzt wird, sind auch relative Verdrehwinkel der beiden Kupplungshälften gegeneinander von weit über 180° möglich.

Statt des Exzentergliedes, des Kurbelgliedes, oder des vorstehend beschriebenen Hülsengliedes kann schliesslich prinzipiell jedes andere bewegungsumsetzende Zwischenglied benutzt werden, solange gewährleistet ist, dass ein solches bewegungsumsetzende Zwischenglied eine Relativverdrehung der Kupplungshälfte, an die es angebunden ist, gegenüber der anderen Kupplungshälfte in eine zumindest im wesentlichen radial gerichtete translatorische Kraftkomponente und Bewegungskomponente umsetzt. Für diese Umsetzung können neben den genannten Maschinenelementen beispielsweise auch die verschiedensten Spreizmechanismen eingesetzt werden. Dabei wird die Auswahl unter den prinzipiell zur Verfügung stehenden Elementen primär auch von der Grösse der zu übertragenden Kräfte vorgegeben.

Die federnden Zwischenglieder, seien dies nun Stahlfedern der verschiedensten Bauweise oder Elastomerkörper, können sowohl mit negativer als auch mit positiver Vorspannung als auch ohne Vorspannung in der unbeaufschlagten Kupplung angeordnet sein. Unter einer negativen Vorspannung wird dabei beispielsweise eine Zugvorspannung des Federelementes verstanden, wenn dieses auf Druck beansprucht wird. Andererseits wäre eine Zugvorspannung des Federelementes eine positive Vorspannung, wenn das Federelement bei Normalbetrieb der Kupplung auf Zug beansprucht werden soll. Die Art der Vorspannung oder gegebenenfalls die Verwendung nicht vorgespannter federnder Zwischenglieder hängt jeweils von den Erfordernissen des einzelnen Anwendungsfalls ab, genauer gesagt, von der Federkennlinie, die von der Kupplung für den einzelnen Fall erwartet wird. Wenn insbesondere beispielsweise eine Kupplung, die in grosser Serie gefertigt wird, für verschiedene Anwendungszwecke mit verschiedener Abstimmung eingesetzt werden soll, so kann dies in besonders vorteilhafter Weise dadurch erreicht werden, dass die federnden Zwischenglieder, beispielsweise Elastomerkörper, in einem aussen umgreifenden Käfig, der Teil der Kupplungshälfte ist oder mit dieser in formschlüssiger Verbindung steht, eingeschlossen werden, wobei der Durchmesser dieses Käfigs durch geeignete Spannmittel oder Rastmittel in den gewünschten Bereichen veränderbar ist. Ist beispielsweise eine bestimmte Kupplung zur Übertragung eines Drehmoments von 100 Nm bei einem Verdrehwinkel von 90° ausgelegt und soll dieselbe Kupplung bei dem gleichen Federwinkel von 90° ein Drehmoment von beispielsweise 130 Nm übertragen, so bedarf es bei einer solcherart als Käfigkupplung ausgelegten Kupplung lediglich des Engerspannens des die federnden Zwischenglieder umspannenden und vorspannenden Käfigs, um diese Bedingungen einzustellen.

Bei der Verwendung von Gummifedern oder Gummi-Metall-Federn als federnde Zwischenglieder lässt sich die Drehmoment-Verdrehwinkel-Kennlinie, also die Federkennlinie der Kupplung, dann in besonders einfacher Weise sowohl für experimentelle Zwecke als auch für die Serienfertigung verändern und einstellen, wenn die Federelemente bei konzentrisch in einer Radialebene angeordneten Kupplungshälften als in axialer Richtung einschiebbar und in Drehrichtung formschlüssig fixierte auswechselbare Elemente ausgebildet sind, speziell als Gummi-Metall-Feder mit zumindest einer radial äusseren und einer radial inneren, das Federelement fixierenden Metallplatte. Durch verschiedene Kombinationen solcher Einzelelemente können die Kennlinien beliebig ausgestattet und angepasst und insbesondere auch in beiden einander entgegengesetzten Drehrichtungen der Relativverdrehung beider Kupplugshälften gegeneinander werden. Bei der Verwendung der Kupplung im Kraftfahrzeugbau können also beispielsweise unterschiedliche Federkennlinien der Kupplung für Vorwärtsfahrt und Rückwärtsfahrt durch Einstecken entsprechender Gummifedern zwischen die beiden Kupplungshälften vorgesehen werden.

Im Axialschnitt können die Gummi-Metall-Federn prinzipiell beliebig nach den jeweiligen Erkenntnissen dieses Bereiches der konstruktiven Technik gestaltet werden. So kann der Elastomerquerschnitt der Gummifedern in axialer Richtung beispielsweise im wesentlichen rechteckig, V-förmig mit radial einwärts oder auswärts weisender Spitze oder mit einem oder mehreren inneren Hohlräumen oder Dämpfungsräumen ausgebildet sein.

Bei Belastung der Kupplung, also bei Einleiten einer Arbeit an einer der Kupplungshälften, wird das Elastomer der Gummifeder, wenn eine solche als federndes Zwischenglied der Kupplung verwendet wird, bei Normalbetrieb vorzugsweise unter Druck belastet. Dabei baucht das Elastomer in axialer Richtung wulstringförmig aus, was unter Umständen für bestimmte Anwendungsfälle, beispielsweise im Schwerkraftfahrzeugbau, zu einer zu «weichen» Federkennlinie der Kupplung führen kann, also zu einer zu schwachen Progression der übertragenen Drehmomente als Funktion des Verdrehwinkels. Diese Situation kann im Bedarfsfall dadurch abgestellt werden, d.h. die Federkennlinie kann dadurch versteift, also stärker progressiv gestaltet werden, dass die Kupplung, zumindest die axial seitlichen in der Radialebene liegenden unbelasteten Gummiringflächen der Gummifedern bzw. Gummi-Metall-Federn durch Bleche nach Art einer Kapsel oder eines Käfigs zu beiden Seiten eingeschlossen werden. Diese Einkapselung kann dabei so erfolgen, dass im entspannten Zustand der Kupplung, also ohne eine in die Kupplung eingeleitete Arbeit, die seitlichen Ringflächen der Gummifedern einigen Abstand zum seitlichen Käfigblech wahren oder, alternativ, direkt an der Innenwand des Käfigblechs anliegen. Im ersten Fall wird bei Beaufschlagung der Kupplung zunächst eine weiche und dann, nach Anliegen des sich auswulstenden Gummis an dem Käfigblech, eine zunehmend progressive Kennlinie erzielt, während im zweiten Fall eine von vornherein steife, also stark progressive Federkennlinie der Kupplung durch eine Verringerung der frei verformbaren unbelasteten Oberfläche der Gummifeder erreicht wird. Insbesondere bei Verwendung lösbar und austauschbar befestigter Gummifederelemente mit unterschiedlichen Shore-Härten und unterschiedlichen geometrischen Formen und insbesondere Abständen zu den Innenwänden der Kapselbleche oder Käfigbleche kann dadurch eine praktisch unbegrenzte Vielfalt und Feinabstimmung der jeweils gewünschten Federkennlinie der Kupplung eingestellt werden. Auch kann bei einer solchen allseitig begrenzt abgeschlossenen Einkapselung des Federelastomers ein so stark progressiver Verlauf der Federkennlinie eingestellt und erzielt werden, dass dieser gleichsam als Anschlag ausgebildet werden kann und dadurch ein höherer Verdrehwinkel der Kupplung ausgenützt werden kann.

Dabei liegt ein weiterer fertigungstechnischer Vorteil bei der allseitigen Verkapselung der Kupplung darin, dass beispielsweise bei Verwendung der Kupplung als Trennkupplung im Kraftfahrzeugbau das Belagträgerblech einstückig mit einem der beiden die Kupplung seitlich verkapselnden Bleche ausgebildet werden kann, das dann gleichzeitig als Zentrierelement dient und direkt auf die zentrale Hülse der Kupplung aufgeschoben und beispielsweise durch einen Sprengring gesichert werden kann.

Wenn das Umsetzerglied ein Exzenter ist, wird bei unbelasteter Kupplung das Exzenterglied üblicherweise so angeordnet und ausgerichtet, dass es in seiner Totlage steht. Bei dieser Nullstellung des Exzenters bei unbelasteter Kupplung stehen nach beiden Drehrichtungen die vollen 180° nutzbarer Federwinkel zur Verfügung. Typisches Merkmal der Exzentergeometrie ist es jedoch, dass bei anfänglicher Verdrehung des Exzenters aus seiner Totlage diese Verdrehung nur in sehr kurze translatorische Verschiebungswege umgesetzt wird. Für Anwendungsfälle, in denen ein solches sehr weiches Einsetzen der Federwirkung der drehelastischen Kupplung unerwünscht ist, kann der Exzenter so eingestellt und angeordnet werden, dass er bei unbeaufschlagter Kupplung um einen jeweils von den Erfordernissen des einzelnen Anwendungsfalls abhängigen und vorgegebenen Winkelbetrag aus seiner Totlage ausgelenkt ist. Dabei kann eine solche Auslenkung der Nullage der Kupplung aus der Totlage des Exzenters sowohl in positiver als auch in negativer Richtung erfolgen. Dabei kann die Festlegung der Abweichung der Nullage von der Totlage des Exzenters in prinzipiell beliebiger und an sich bekannter Weise erfolgen, beispielsweise durch eine entsprechend verdrehte Ausbildung des den Exzenter aufnehmenden Lagers, das mit den federnden Zwischengliedern verbunden ist.

Die drehelastische Kupplung ist vorzugsweise so ausgelegt, dass Antrieb und Abtrieb koaxial verlaufen.

Die drehelastische Kupplung gemäss der Erfindung zeichnet sich durch eine ungewöhnlich grosse Anpassbarkeit aus und zwar sowohl hinsichtlich der einzustellenden Verdrehwinkel als auch der zu übertragenden Drehmomente als auch der Grösse der Bauweise. Aufgrund dieser Eigenschaften kann die drehelastische Kupplung gemäss der Erfindung praktisch in jedem beliebigen Bereich der Technik überall dort eingesetzt werden, wo Drehmomente drehelastisch zu übertragen sind. Die Kupplung kann vor allem als Dämpfungsglied in Antriebssystemen eingesetzt werden, wobei sie gleichzeitig auch als wirksamer Überlastungsschutz dienen kann. Die zur Zeit wichtigste Bedeutung hat die drehelastische Kupplung gemäss der Erfindung jedoch im Kraftfahrzeugbau, wo sie vor allem zur Dämpfung der Drehmomentenstösse bei niedrigen und extrem niedrigen Motordrehzahlen eingesetzt werden kann. Die drehelastische Kupplung gemäss der Erfindung kann dabei mit besonderem Vorteil in den heute gebräuchlichen Trennkupplungen des Kraftfahrzeugbaus eingesetzt werden und zwar zwischen der Mitnehmerscheibe oder Kupplungsscheibe der Trennkupplung und der Ausgangswelle der Trennkupplung bzw. der Eingangswelle des Schaltgetriebes. Von der Anmelderin durchgeführte Fahrversuche haben gezeigt, dass mit heute im Handel befindlichen Personenkraftwagen ein störungsfrei sanftes Anfahren im 4. Gang, also bei grosser Übersetzung, selbst dann möglich ist, wenn die in den heute gebräuchlichen Trennkupplungen üblichen Belagfedern ausgebaut werden.

Aufgrund der grossen Federwinkel, der extremen Robustheit und Standzeit und der praktisch beliebig einstellbaren Federkenndaten wird die drehelastische Kupplung gemäss der Erfindung im Kraftfahrzeugbau vorzugsweise weiterhin als Tilger, insbesondere Niederfrequenztilger, eingesetzt.

Die Erfindung ist im folgenden anhand von Ausführungsbeispielen in Verbindung mit den Zeichnungen näher erläutert. Es zeigen:

Fig. 1 eine axiale Draufsicht auf ein Ausführungsbeispiel der drehelastischen Kupplung;

Fig. 2 einen Schnitt nach II–II in Fig. 1;

Fig. 3 ein modifiziertes Ausführungsbeispiel der drehelastischen Kupplung gemäss Fig. 1;

Fig. 4 ein weiteres Ausführungsbeispiel der drehelastischen Kupplung;

Fig. 5 ein Ausführungsbeispiel der drehelastischen Kupplung in axialer Draufsicht nach Art der Fig. 1 mit axial einschiebbaren Gummifedern;

Fig. 6 in einem der Fig. 2 entsprechenden partiellen Axialschnitt ein Ausführungsbeispiel der drehelastischen Kupplung mit Gummifedern im entspannten und im belasteten Zustand mit Seitenblechverkapselung auf beiden Seiten;

Fig. 7 im axialen Partialschnitt ein von der Rechteckform abweichendes Profil der Gummifeder der drehelastischen Kupplung;

Fig. 8 ein weiteres Profil der Gummifeder der drehelastischen Kupplung in einer der Figur 7 entsprechenden Darstellung; und

Fig. 9 ein Ausführungsbeispiel der Gummifeder der drehelastischen Kupplung, bei der die Gummifeder axial in zwei symmetrische Elemente aufgeteilt ist.

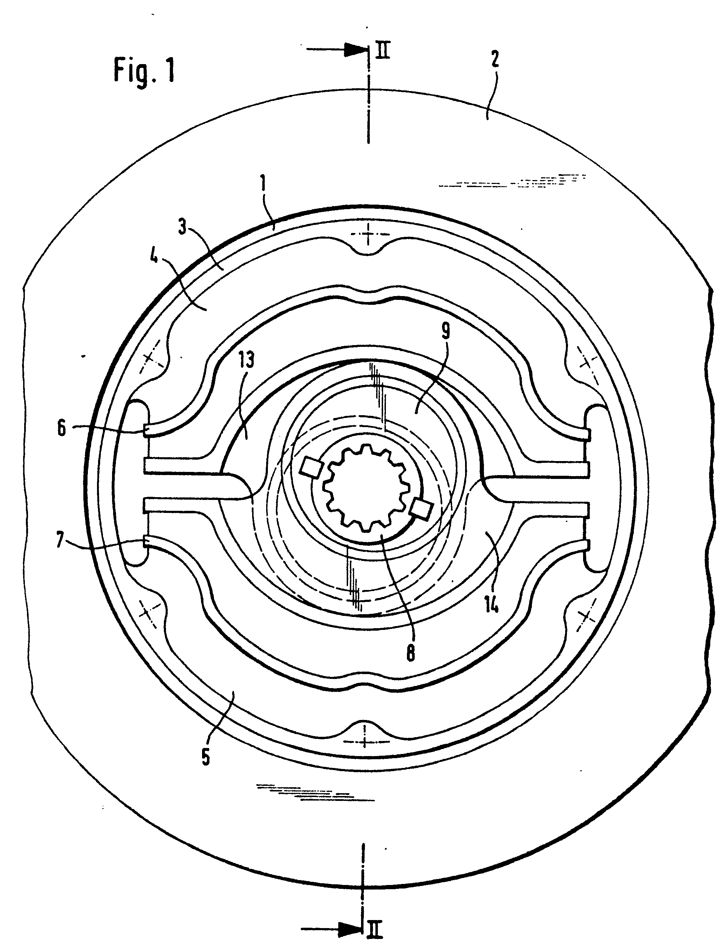

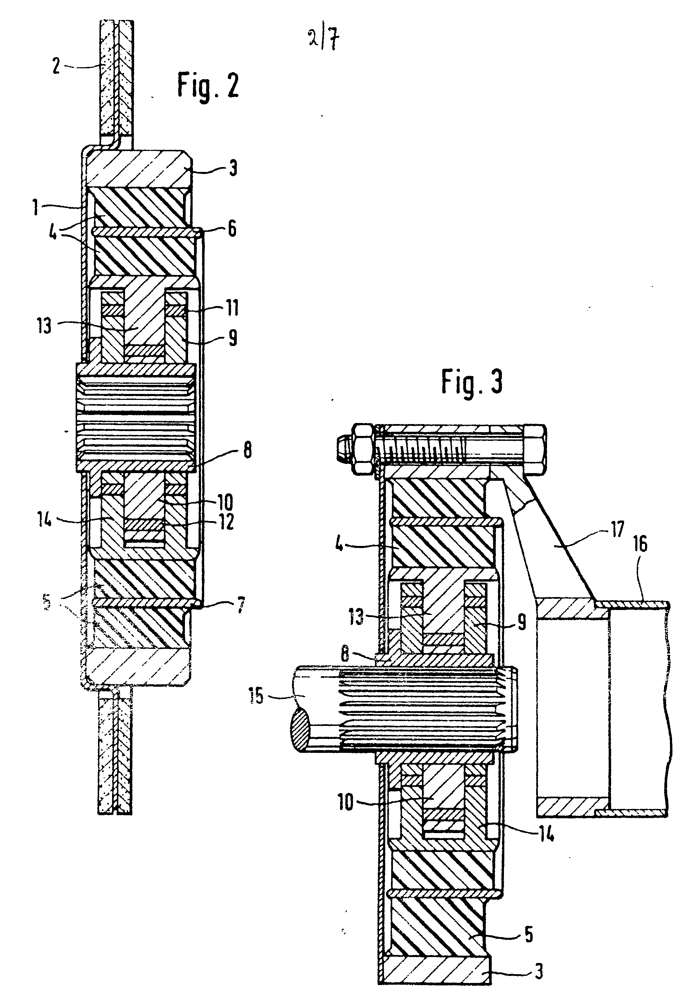

In den Figuren 1 und 2 ist ein Ausführungsbeispiel der drehelastischen Kupplung als Bestandteil einer Trennkupplung für den Kraftfahrzeugbau dargestellt. Die Mitnehmerscheibe 1 mit den Kupplungsbelägen 2 ist drehfest an einem zylindrischen Stahlring befestigt, der die eine Kupplungshälfte 3 der drehelastischen Kupplung bildet. Diametral einander gegenüberliegend sind drehfest an der Innenseite der ringförmigen Kupplungshälfte 3 zwei Elastomerkörper 4, 5 anvulkanisiert, die als federelastische Zwischenglieder der drehelastischen Kupplung wirken. Die Elastomerkörper 4, 5 haben zumindest im wesentlichen die Form zylindrischer Halbschalen und sind zur Vergrösserung ihres Formfaktors, also zur Vergrösserung der Formsteifigkeit durch Querdehnungsbehinderung unter Drucklast, mit jeweils einem Zwischenblech 6, 7 versehen.

Die Getriebewellenhülse der Trennkupplung dient als zweite Kupplungshälfte 8 der drehelastischen Kupplung. Die zweite Kupplungshälfte 8 ist drehfest mit zwei Exzenterscheiben 9, 10 verbunden, die in dem hier gezeigten Ausführungsbeispiel aus Gründen des Massenausgleichs gabelverzahnt ausgebildet sind.

Die Exzenterscheiben 9, 10 sind über Wälzkörperlager oder Gleitlager 11, 12 drehbar in Lagerschalen 13, 14 gelagert, die fest mit den federnden Zwischengliedern 4, 5, hier mit den Elastomerkörpern, durch Vulkanisation verbunden sind. Dabei sind die Lager 11, 12 in den Lagerschalen 13, 14 so in der aus Fig. 1 ersichtlichen Weise selbst exzentrisch angeordnet, dass in der aus Fig. 1 ebenfalls ersichtlichen Weise bei unbelasteter Kupplung die Null-Lage der Kupplung bzw. des Exzenters aus der Totlage des Exzenters, bezogen auf die federnden Zwischenglieder 4, 5, herausgedreht ist.

Bei einer Relativverdrehung der Kupplungshälften 3 und 8 der drehelastischen Kupplung gegeneinander werden die Lagerschalen 13, 14 gegen die Federkraft der federnden Zwischenglieder 4, 5 im wesentlichen radial auswärts gezwungen. Diese radial auswärts gerichtete Bewegung ist dabei zusätzlich durch eine geringe Querversetzung der beiden Lagerschalen 13, 14 in gegenläufiger Richtung überlagert. Die dadurch in den als federnde Zwischenglieder 4, 5 ausgelegten Elastomerkörpern zusätzlich auftretenden Scherspannungen sind jedoch gegenüber den primär auftretenden radial gerichteten Verformungsdruckspannungen von der Grössenordnung her zu vernachlässigen.

In der Fig. 3 ist in der Sicht der Fig. 2 ein modifiziertes Ausführungsbeispiel der in den Figuren 1 und 2 dargestellten Kupplung gezeigt. Im Aufbau der funktionswesentlichen Teile der drehelastischen Kupplung entspricht das in Fig. 3 gezeigte Ausführungsbeispiel dem auch in der Fig. 2 gezeigten Ausführungsbeispiel. Im Gegensatz zu dem in Fig. 2 gezeigten Ausführungsbeispiel ist die in Fig. 3 gezeigte Kupplung jedoch keine Trennkupplung, sondern eine feste Kupplung, bei der ein Drehmoment von einer Eingangswelle 15 auf eine Ausgangswelle 16 über eine feste Verbindung 17 übertragen wird. Dabei ist die Eingangswelle 15 mit der einen Kupplungshälfte 8 und die Ausgangswelle 16 über die feste Verbindung 17 mit der anderen Kupplungshälfte 3 verbunden.

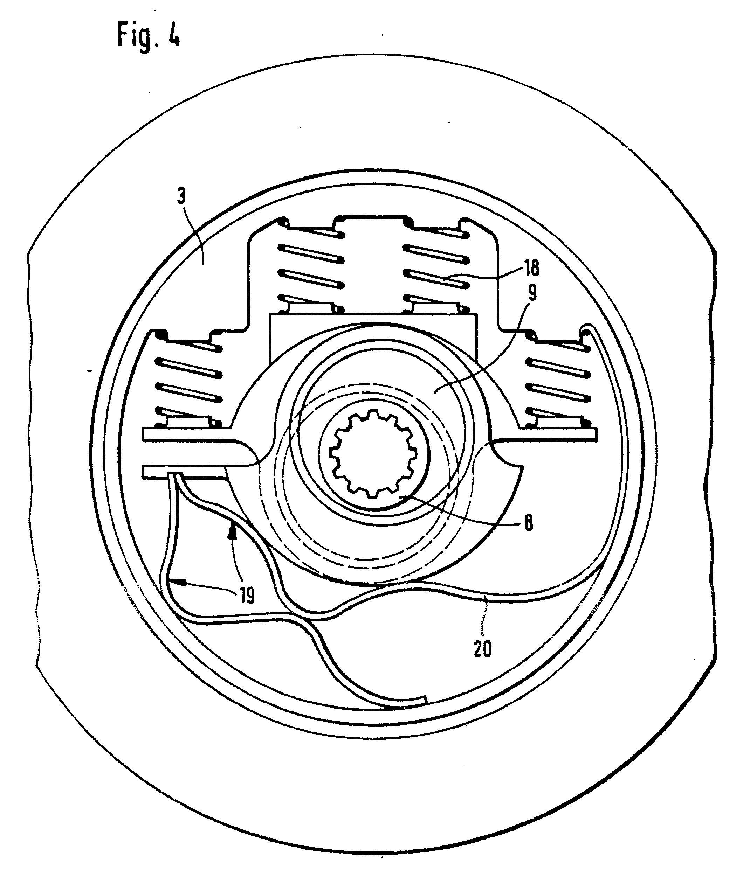

In Draufsicht in axialer Richtung ist in der Fig. 4 ein Ausführungsbeispiel der drehelastischen Kupplung der in Fig. 1 gezeigten Art dargestellt, bei der die in Figur 1 gezeigten Elastomerkörpet 4, 5 durch Stahlfederelemente ersetzt sind, und zwar durch Schraubenfedern 18, ein Elliptikfederelement 19 und eine speziell angepasst geformte Blattfeder 20.

Durch eine Erhöhung der Reibung in den Exzenterlagern, beispielsweise durch zusätzliche Reibscheiben oder Tellerfedern, kann die Federcharakteristik der drehelastischen Kupplung zusätzlich durch eine einstellbare Dämpfungscharakteristik ergänzt werden.

Weiterhin braucht die Kupplung bei Ausrüstung mit mehreren Exzentern nicht in der in den Figuren 2 und 3 gezeigten Weise gabelverzahnt ausgebildet zu sein, sondern können die einzelnen Exzenterscheiben mit den zugeordneten Lagern und federnden Zwischengliedern in axialer Folge vergabelt aufeinanderliegend montiert, beispielsweise anschliessend in einen gemeinsamen Käfig eingespannt und dann mit einem vorberechneten Massenausgleich versehen werden. Insbesondere bei Serienfertigung der drehelastischen Kupplung ist eine solche Ausgestaltung der Kupplung von Vorteil.

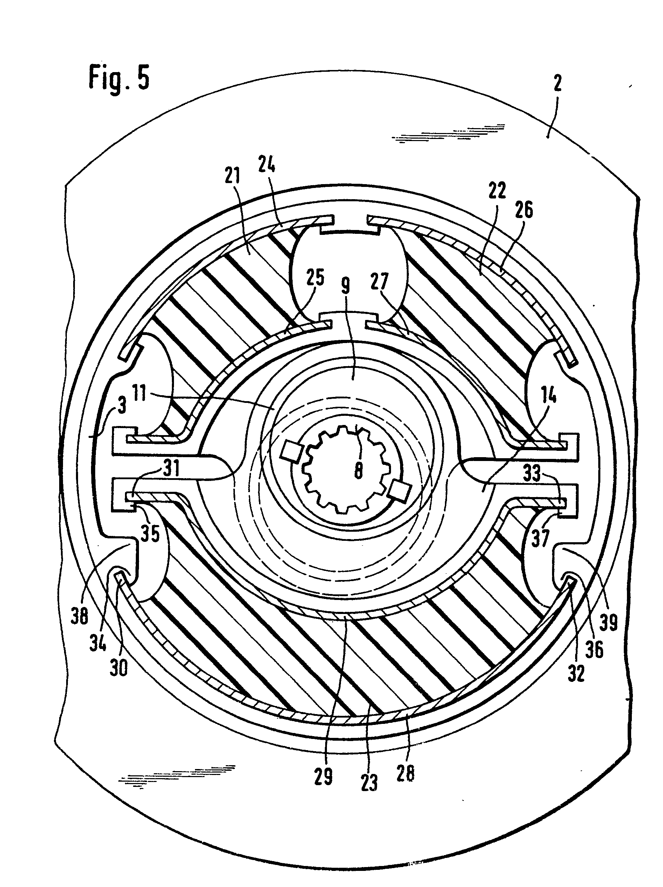

In der Fig. 5 ist in axialer Draufsicht eine drehelastische Kupplung der in Fig. 1 gezeigten Art dargestellt, bei der die federnden Zwischenglieder als austauschbare Elastomerfedern 21, 22 und 23 ausgebildet sind. An den federnden Elastomerkörpern jedes dieser Elastomerfederelemente sind jeweils an den beiden einander gegenüberliegenden Hauptoberflächen, bezogen auf die Kupplung also radial innen und radial aussen, Stahlbleche 24, 25, 26, 27, 28, 29 anvulkanisiert, deren Kanten in Umfangsrichtung der Kupplung über den Elastomerkörper, an den sie anvulkanisiert sind, überstehen. Diese überstehenden Kanten 30, 31, 32, 33 hintergreifen in Umfangsrichtung der Kupplung formschlüssig profilkorrespondierend und in axialer Richtung als Führungsschienen dienende Hinterschnitte 34, 35, 36 und 37. Von diesen Hinterschnitten sind die an jeweils einem der beiden Aussenbleche der Elastomerfeder angreifenden Hinterschnitte formschlüssig mit einer der beiden Kupplungshälften verbunden, während die an dem jeweils gegenüberliegenden Aussenblech derselben Elastomerfeder angreifenden Hinterschnitte kraftschlüssig mit der jeweils anderen Kupplungshälfte verbunden sind. In dem in Fig. 5 gezeigten Ausführungsbeispiel sind also beispielsweise die Aussenkanten 30 und 32 des Aussenblechs 28 der Elastomerfeder 23 axial verschiebbar und in Umfangsrichtung formschlüssig unter den Hinterschnitten 34, 36 gehaltert, die formschlüssig, hier einstückig, mit der radial äusseren Kupplungshälfte 3 verbunden bzw. ausgebildet sind. In gleicher Weise sind die Kanten 31, 33 des radial inneren Blechs 29 der Elastomerfeder 23 in Hinterschnitten 35, 37 axial verschiebbar und in Umfangsrichtung formschlüssig an der Lagerschale 14 gehaltert, die kraftschlüssig über das Lager 11 und den Exzenter 9 mit der inneren Kupplungshälfte 8 verbunden ist. Dabei braucht die Elastomerfeder 23 selbstverständlich nicht in der in Fig. 5 unten gezeigten Weise als nur eine grosse Feder ausgebildet zu sein, sondern kann beispielsweise in der in Fig. 5 oben gezeigten Weise in Form von zwei Einzelfedern 21, 22 ausgebildet sein und kann selbstverständlich ebenso in Form von drei, vier oder mehr Federn gestaltet werden. Auch brauchen die Elastomerfedern nicht in der in Fig. 5 gezeigten Weise aus einem durchgehenden Elastomerblock zwischen einem inneren und einem äusseren Halteblech zu bestehen, sondern können selbstverständlich in an sich bekannter Weise, beispielsweise in der in Fig. 1 angedeuteten Art, mindestens ein, vorzugsweise mehrere Zwischenbleche einvulkanisiert enthalten, um dadurch in an sich bekannter Weise die Querdehnbarkeit der Federn zu behindern und die Formsteifigkeit zu erhöhen.

Zusätzlich zu dem in Fig. 1 gezeigten Ausführungsbeispiel der drehelastischen Kupplung weist das in Fig. 5 gezeigte Ausführungsbeispiel Anschlagkanten 38, 39 auf, die den radialen Verschiebungsweg der Lagerschale 14 begrenzen. Während also die in Fig. 1 gezeigte drehelastische Kupplung bei Überlastung «durchrutscht», also beispielsweise Motoren oder angetriebene Aggregate vor einer Überlastung schützt, führt die in Fig. 5 gezeigte drehelastische Kupplung bei Überlastung zu einer in Richtung der Beaufschlagung starren Verbindung zwischen Eingangswelle und Ausgangswelle, wie dies zu Sicherheitszwecken, beispielsweise bei Aufzügen, in vielen Fällen erforderlich ist.

Der in der Fig. 5 nur im unteren Teil der Kupplung dargestellte Anschlag kann selbstverständlich zusätzlich auch im oberen Teil der Kupplung vorgesehen sein, so dass also jede der beiden in Fig. 5 gezeigten Lagerschalen 13, 14 durch Anschläge begrenzt radial verschiebbar ist.

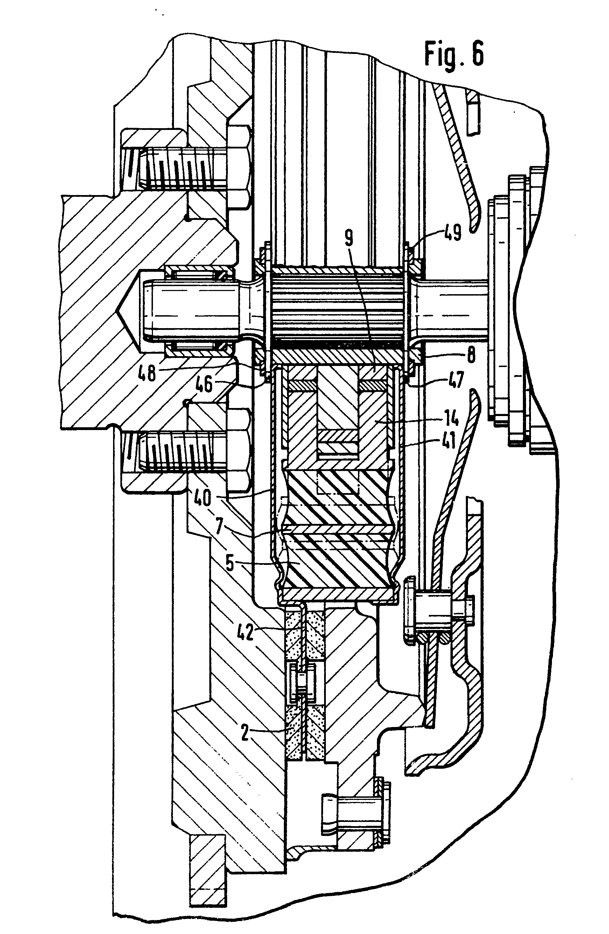

In der Fig. 6 ist im axialen Partialschnitt ein Ausführungsbeispiel der drehelastischen Kupplung gezeigt, das sich von dem in Fig. 2 gezeigten Ausführungsbeispiel durch die Verkapselung der Kupplung auf beiden Stirnseiten unterscheidet. Die auf den beiden einander gegenüberliegenden Stirnseiten angeordneten und auf der Kupplungshülse 8 zentrierten Kapselbleche 40, 41, von denen das eine, nämlich das Kapselblech 40, gleichzeitig einstückig mit dem Belagträgerblech 42 ausgebildet ist, dienen der Begrenzung der Verformung der Elastomerschichten der federnden Zwischenglieder 4, 5 in axialer Richtung unter Last, wodurch die Federkennlinie der drehelastischen Kupplung versteift wird. In der Fig. 6 ist das gummielastische Zwischenglied 5 im entlasteten Zustand mit durchgezogenen Linien dargestellt, während der bei Beaufschlagung der Kupplung eintretende belastete Verformungszustand, der durch die Druckbeaufschlagung des Zwischengliedes in radialer Richtung hervorgerufen wird, mit unterbrochen gezeichneten Linien wiedergegeben ist.

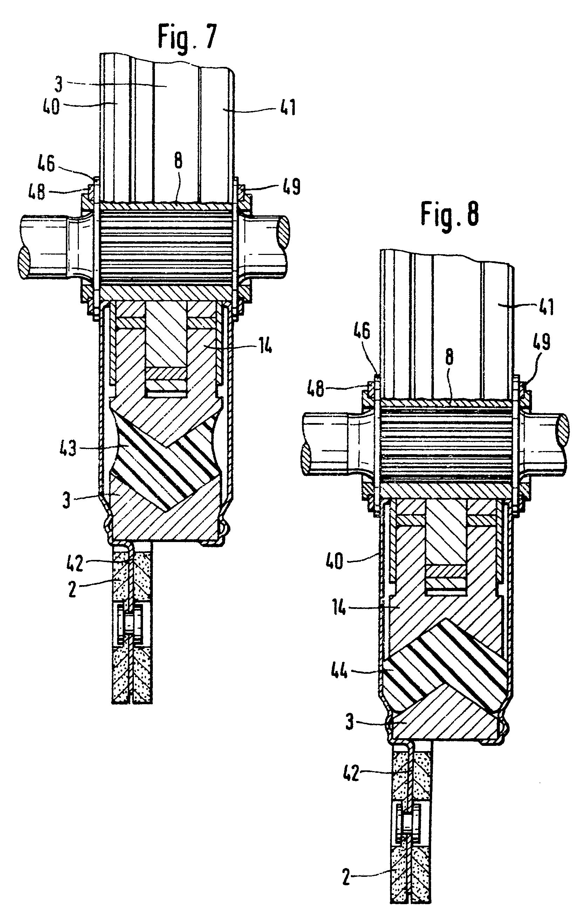

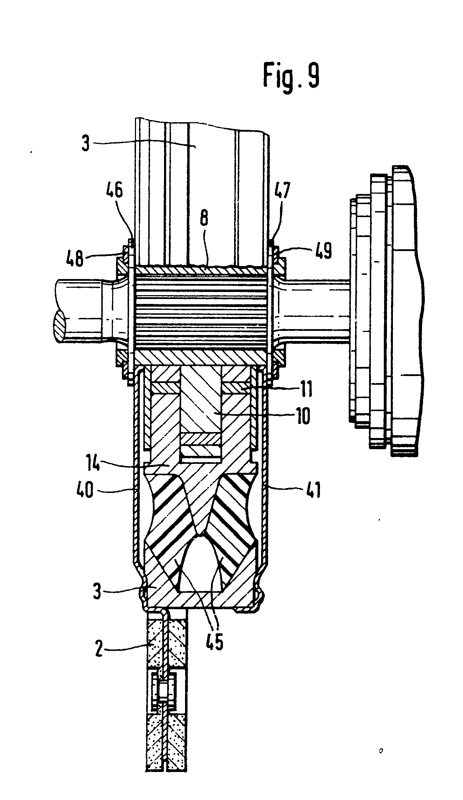

Drei weitere Versionen einer verkapselten drehelastischen Kupplung sind in einer der Fig. 6 entsprechenden Darstellungsweise in den Figuren 7, 8 und 9 gezeigt. Sie unterscheiden sich von dem in Fig. 6 gezeigten Ausführungsbeispiel durch das unterschiedliche Profil der Elastomerfedern 43 (Fig. 7), 44 (Fig. 8) und 45 (Fig. 9).

Abgesehen davon, dass die in Fig. 7 gezeigte Elastomerfeder nach radial aussen gewinkelt ist und die in Fig. 8 gezeigte Elastomerfeder 44 nach radial innen gewinkelt ist, unterscheiden sich die beiden Elastomerfedern wesentlich dadurch, dass die Elastomerfeder 43 in dem in Fig. 7 gezeigten unbelasteten Zustand der Kupplung einen deutlichen Abstand von den Kapselblechen 40, 41 aufweist, während die Elastomerfeder 44 in dem in Fig. 8 ebenfalls gezeigten unbeaufschlagten Zustand an den Kapselblechen 40, 41 anliegt. Bei Beaufschlagung der in Fig. 7 gezeigten Kupplung kann sich also die Elastomerfeder 43 zunächst in axialer Richtung ohne Widerstand verformen, und zwar solange, bis das Elastomer an den Kapselblechen 40, 41 anliegt. Erst dann wird die weitere Verformung behindert, was zu einer stärkeren Progression der Federkennlinie der Kupplung, also zu einer «Versteifung» der Kupplung nach anfänglich weicher Federkennlinie führt. Im Gegensatz dazu zeigt die in Fig. 8 dargestellte Kupplung einen von Anfang an relativ stark progressiven Verlauf der Federkennlinie der Kupplung.

Während in der Fig. 8 im Vergleich zu der in Fig. 7 gezeigten Kupplung ein Ausführungsbeispiel der drehelastischen Kupplung gezeigt ist, das eine von Anfang an stark progressive einsetzende Federkennlinie aufweist, weist die in Fig. 9 gezeigte drehelastische Kupplung ein zunächst noch weicheres Einsetzen der Federkennlinie, also einen noch flacheren Verlauf des Drehmomentes als Funktion des Verdrehwinkels auf als dies für das in Fig. 7 gezeigte Ausführungsbeispiel der Fall ist. Dies ist darauf zurückzuführen, dass sich die Elastomerfeder 45 (Fig. 9) bei Druckbeaufschlagung in radialer Richtung zunächst sowohl nach axial innen als auch nach axial aussen verformen kann. Durch die Anlage der beiden Teilfedern axial innen aneinander und axial aussen an den Kapselblechen 40, 41 wird dann auch die Federkennlinie der in Fig. 9 gezeigten drehelastischen Kupplung stark progressiv.

In den Figuren 6, 7, 8 und 9 sind die dort dargestellten Kapselbleche 40, 41 in gleicher Weise auf die als Hülse ausgebildete innere Kupplungshälfte 8 aufgeschoben und axial jeweils durch eine Beilagscheibe 46, 47 und einen jeweils vorgesteckten Sprengring 48, 49 gesichert. Diese axiale Fixierung kann selbstverständlich auch in prinzipiell beliebiger anderer Weise erfolgen. Auch können an der drehelastischen Kupplung eine Reihe an sich im Kupplungsbau bekannter Merkmale verwirklicht sein, ohne dass der Rahmen der Erfindung dadurch verlassen wird. So braucht beispielsweise das Belagträgerblech 42 nicht in der hier der Einfachheit halber dargestellten Weise als flache Kreisringscheibe ausgebildet zu sein, sondern kann durchaus auch in an sich bekannter Weise als Belagträgerfeder gewellt ausgebildet sein. Auch bleibt es dem Fachmann unbenommen, im Bedarfsfall an sich bekannte und gebräuchliche Vordämpfer in Verbindung mit der drehelastischen Kupplung gemäss der Erfindung einzusetzen.

**Patentansprüche**

1. Drehelastische Kupplung, bei der die beiden Kupplungshälften (3, 8) durch mindestens ein federndes Zwischenglied (4, 5) miteinander verbunden sind, und zwar über mindestens ein bewegungsumsetzendes Zwischenglied (9, 10), das eine Rotation in eine Translation umsetzt und das rotatorisch mit einer der Kupplungshälften (8) verbunden ist und translatorisch in zumindest im wesentlichen radialer Richtung, bezogen auf die Drehachse der Kupplung, mit mindestens einem der federnden Zwischenglieder (4, 5) verbunden ist, das seinerseits drehfest mit der anderen Kupplungshälfte (3) verbunden ist, dadurch gekennzeichnet, dass das bewegungsumsetzende Zwischenglied (9, 10) ein Exzenterglied ist, das als eine oder eine Gruppe von Exzenterscheiben (9, 10) ausgebildet ist.

2. Kupplung nach Anspruch 1, dadurch gekennzeichnet, dass die Exzenterscheibe oder Exzenterscheiben (9, 10) exzentrisch und drehfest mit einer Kupplungshälfte (8) verbunden und drehbar (11, 12) an dem oder den federnden Zwischengliedern (4, 5) gelagert (13, 14) ist bzw. sind.

3. Kupplung nach einem der Ansprüche 1 oder 2, dadurch gekennzeichnet, dass das federnde Zwischenglied eine Elastomerfeder (21; 22; 23; 43; 44; 45), eine Gummi-Metall-Feder (4; 5), ein Schraubenfeder (18), eine Elliptikfeder (19) oder eine speziell angepasst geformte Blattfeder (20) ist.

4. Kupplung nach Anspruch 3, dadurch gekennzeichnet, dass die Elastomerfeder oder Gummi-Metall-Feder als zumindest im wesentlichen zylindrisch gekrümmtes Element (4; 5; 21; 22; 23; 43; 44; 45) ausgebildet ist, das mit einer seiner Mantelflächen vollflächig und drehfest mit einer Kupplungshälfte (3) verbunden oder in diese eingespannt oder eingepasst ist und mit seiner anderen Mantelfläche das bewegungsumsetzende Zwischenglied drehbar gelagert umschliesst oder an diesem anliegt.

5. Kupplung nach einem der Ansprüche 1 bis 4, dadurch gekennzeichnet, dass die federnden Zwischenglieder (21; 22, 23) durch axiales Verschieben in rotatorisch fixierenden Führungen (34, 35, 36, 37) montierbar und austauschbar sind.

6. Kupplung nach einem der Ansprüche 1 bis 5, gekennzeichnet durch Anschlagelemente (38, 39), die den Federweg zumindest eines der federnden Zwischenglieder (23) oder die Relativverdrehbarkeit der beiden Kupplungshälften gegeneinander begrenzen.

7. Kupplung nach einem der Ansprüche 1 bis 6, dadurch gekennzeichnet, dass das Exzenterglied bei unbelasteter Kupplung durch Anschlagmittel, Kräftekompensation einwirkender Federkräfte der federnden Zwischenglieder oder durch eine entsprechende Lagergeometrie in einer Winkelstellung gehalten ist, die um einen vom jeweils speziellen Anwendungsfall vorgegebenen Betrag von der Totlage abweicht.

8. Kupplung nach einem der Ansprüche 1 bis 7, dadurch gekennzeichnet, dass die beiden Kupplungshälften (3, 8) koaxial und in der Weise konzentrisch zueinander angeordnet sind, dass die mit dem Exzenterglied (9, 10) drehfest verbundene Kupplungshälfte (8) innenliegend von der drehfest mit den federnden Zwischengliedern (4, 5) verbundenen Kupplungshälfte (3) aussenliegend umschlossen wird.

9. Kupplung nach einem der Ansprüche 1 bis 8, dadurch gekennzeichnet, dass die federnden und die bewegungsumsetzenden Zwischenglieder so zueinander angeordnet sind, dass die federnden Zwischenglieder bei einer Relativverdrehung der beiden Kupplungshälften gegeneinander in beiden Drehrichtungen zumindest im wesentlichen nur einer Druckbeanspruchung und keiner Zugbeanspruchung unterliegen.

10. Verwendung der Kupplung nach einem der Ansprüche 1 bis 9 im Kraftfahrzeugbau, und zwar im Antriebssystem, insbesondere zwischen der Mitnehmerscheibe und der Abtriebswelle einer Trennkupplung, und als Tilger, insbesondere Niederfrequenztilger.

**Revendications**

1. Accouplement élastique à rotation dans lequel les deux moitiés d'accouplement (3, 8) sont reliées l'une à l'autre par au moins un organe intermédiaire élastique (4, 5), à l'aide d'au moins un organe intermédiaire transformateur de mouvements (9, 10) qui transforme une rotation en une translation et qui est relié, pour la rotation, à l'une des moitiés d'accouplement (8), et est relié pour la translation, dans au moins une direction sensiblement radiale par rapport à l'axe de rotation de l'accouplement, à l'un au moins des organes intermédiaires élastiques (4, 5), qui, à son tour, est relié, sans rotation relative possible, à l'autre moitié d'accouplement (3), caractérisé en ce que l'organe intermédiaire transformateur de mouvements (9, 10) est un organe à excentrique constitué par un plateau d'excentrique ou un groupe de plateaux d'excentrique (9, 10).

2. Accouplement selon la revendication 1, caractérisé en ce que le ou les plateaux d'excentrique (9, 10) sont reliés, d'une manière excentrique et sans rotation relative possible, à l'une des moitiés d'accouplement (8), et ils sont montés sur palier, de manière à pouvoir tourner (11, 12) sur le ou les organes intermédiaires élastiques (4, 5).

3. Accouplement selon l'une des revendications 1 ou 2, caractérisé en ce que l'organe intermédiaire élastique est un ressort en élastomère (21, 22, 23, 43, 44, 45), un ressort en caoutchouc et métal (4, 5), un ressort hélicoïdal (18), un ressort elliptique (19), ou un ressort à lames (20), d'une forme spécialement adaptée.

4. Accouplement selon la revendication 3, caractérisé en ce que le ressort en élastomère ou le ressort en caoutchouc et métal est constitué par un élément incurvé, au moins sensiblement, suivant la forme d'un cylindre (4, 5, 21, 22, 23, 43, 44, 45), qui, par l'une de ses surfaces d'enveloppe, est relié, sur toute sa surface et sans rotation possible, à l'une des moitiés d'accouplement (3), ou y est serré ou inséré, et, par son autre surface d'enveloppe, entoure l'organe intermédiaire transformateur de mouvements ou s'applique contre lui, en étant monté sur un palier de manière à pouvoir tourner.

5. Accouplement selon l'une des revendications 1 à 4, caractérisé en ce que les organes intermédiaires élastiques (21, 22, 23) peuvent être montés et remplacés par déplacement dans le sens axial dans des dispositifs de guidage (34, 35, 36, 37) assurant la fixation pour la rotation.

6. Accouplement selon l'une des revendications 1 à 5, caractérisé en ce qu'il comprend des éléments de butée (38, 39) qui limitent la trajet élastique de l'un au moins des organes intermédiaires élastiques (23), ou la possibilité de rotation relative des deux moitiés d'accouplement l'une par rapport à l'autre.

7. Accouplement selon l'une des revendications 1 à 6, caractérisé en ce que, lorsque l'accouplement n'est soumis à aucune charge, l'organe à excentrique est maintenu, par des dispotifis butée, par des forces élastiques des organes intermédiaires élastiques assurant une compensation des forces, ou par une géométrie convenable des paliers, dans une position angulaire qui s'écarte du point mort d'une quantité donnée, correspondant à chaque cas d'utilisation.

8. Accouplement selon l'une des revendications 1 à 7, caractérisé en ce que les deux moitiés d'accouplement (3, 8) sont montées coaxialement et concentriquement l'une part rapport à l'autre, de telle manière que la moitié d'accouplement qui est reliée sans rotation relative possible avec l'organe à excentrique (9, 10) et située à l'intérieur entourée par la moitié d'accouplement (3), reliée sans rotation relative possible aux organes intermédiaires élastiques (4, 5) et située à l'extérieur.

9. Accouplement selon l'une des revendications 1 à 8, caractérisé en ce que les organes intermédiaires élastiques et trasformateurs de mouvements sont montés de telle manière les uns par rapport aux autres que, pendant une rotation relative des deux moitiés d'accouplement l'une par rapport à l'autre dans les deux sens de rotation, les organes intermédiaires élastiques ne sont soumis essentiellement qu'à un effort de compression, et ne sont soumis à aucun effort de traction.

10. Utilisation de l'accouplement selon l'une des revendications 1 à 9 en construction automobile, spécialement dans le système d'entraînement, en particulier entre le disque d'entraînement et l'arbre entraîné d'un accouplement dissociable et comme amortisseur, notamment comme amortisseur à basse fréquence.

**Claims**

1. A rotationally elastic coupling in which the two half couplings (3, 8) are conntected by at least one sprung intermediate link (4, 5) using at least one movement-converting intermediate link (9, 10), which changes the rotational into a translational movement and which is rotationally connected with one half coupling (8) and translationally in generally radial direction relative to the center of rotation of the coupling connected with at least one of the sprung intermediate links (4, 5), which is for its part rotationally solidly connected with the other half coupling (3), characterized in that the movement-converting intermediate link (9, 10) is an eccentric link, which is constructed as one or a group of eccentric discs (9, 10).

2. A coupling according to claim 1, characterized in that the eccentric disc or the eccentric discs (9, 10) are eccentrically and rotationally solidly connected with one half coupling (8) and are carried (13, 14) with rotational freedom (11, 12) on the sprung intermediate link or the sprung intermediate links (4, 5).

3. A coupling according to one of the claims 1 or 2, characterized in that the sprung intermediate link is an elastomer spring (21, 22, 23, 43, 44, 45), a rubber-metal-spring (4, 5), a helical spring (18), an elliptic spring (19) or a specially adapted shaped leaf spring (20).

4. A coupling according to claim 3, characterized in that the elastomerspring or the rubber-metal spring is shaped as a generally cylindrically curved element (4, 5, 21, 22, 23, 43, 44, 45), which is connected holohedrally and rotationally solidly by one of its outer surfaces with one half coupling (3) or which is clamped or adjusted to it and which encloses pivotedly the movement-converting intermediate link or rests against it.

5. A coupling according to one of the claims 1 to 4, characterized in that the sprung intermediate links (21, 22, 23) are mountable and changeable by axially shifting in rotationally fixing slideways (34, 35, 36, 37).

6. A coupling according to one of the claims 1 to 5, characterized by stop elements (38, 39), which are limiting the spring deflection of at least one of the sprung intermediate links (23) or the relative twist between the two half couplings.

7. A coupling according to one of the claims 1 to 6, characterized in that the eccentric link with the coupling unloaded is fixed in an angular position, which is deflected from its dead centre position by an angle which is prescribed by the individual application, by stop elements, compensation of the elastic force of the sprung intermediate links or an appropriate bearing geometry.

8. A coupling according to one of the claims 1 to 7, characterized in that the two half couplings (3, 8) are coaxial and concentric to each other, so that the half coupling (8) connected rotationally solidly with the eccentric link (9, 10) inside is enclosed outside by the half coupling (3) connected rotationally solidly with the sprung intermediate links (4, 5).

9. A coupling according to one of the claims 1 to 8, characterized in that the resilient and movement-converting intermediate links are arranged in such a way, that the sprung intermediate links with the two half couplings relatively twisted in the two opposed rotational directions are only subject to in generally a pressure load and no tensile load.

10. An application of a coupling according to one of the claims 1 to 9 in the field of vehicle building, exactly in the driving unit, in particular between the clutch plate and the output shaft of a clutch, and as a suppressor, particularly a low frequency suppressor.

**Fig. 1**

Fig. 2

Fig. 3

Fig. 4

**Fig. 5**

**Fig. 6**

Fig. 7

Fig. 8

7/7

## Fig. 9